# EUROPEAN PATENT SPECIFICATION

(11) **EP 2 495 285 B1**
(45) Date of publication and mention of the grant of the patent: **25.12.2019**
(21) Application number: 10826746.9
(22) Date of filing: 27.10.2010
(51) Int. Cl.: C08K 9/02, C08G 77/04, C08G 77/16, C08L 83/06

(54) **METHOD OF MANUFACTURING USING SILICONE RUBBER COMPOSITION**
VERFAHREN ZUR HERSTELLUNG UNTER VERWENDUNG VON SILIKONKAUTSCHUKZUSAMMENSETZUNG
PROCEDE DE PREPARATION UTILISANT UNE COMPOSITION DE CAOUTCHOUC DE SILICONE

(30) Priority: 28.10.2009 JP 2009247312; 25.10.2010 JP 2010238267
(43) Date of publication of application: 05.09.2012
(73) Proprietor: Momentive Performance Materials Japan LLC, Tokyo 107-6109 (JP)
(72) Inventor: MATSUKURA Toshihiko, Tokyo 107-6109 (JP); IIJIMA Hiroyoshi, Tokyo 107-6109 (JP)
(74) Representative: Diehl & Partner GbR
(86) International application number: PCT/JP2010/069018
(87) International publication number: WO 2011/052614

(56) References cited:
- JP-A- 8 277 347
- JP-A- 9 296 072
- JP-A- 10 025 428
- JP-A- 10 030 066
- JP-A- 2000 188 822
- JP-A- 2000 351 903
- JP-A- 2003 331 653
- JP-A- 2006 059 558
- JP-A- 2007 008 790
- US-A1- 2003 216 234

## Description

### Technical Field

The present invention relates to the use of a silicone rubber composition for electrical power or telecommunication apparatuses, including a high-dielectric and low-loss dielectric insulating silicone rubber composition having a relative permittivity of 5 to 100 and a dielectric tangent of 0.1 or less.

### Background Art

Traditionally, high-dielectric materials have been used for applications of electrical power, or the telecommunication apparatuses. For example, in relation to the application of electrical power, the high-dielectric material is used as an electric field-relaxing material of power cable connection parts or power cable termination parts. Additionally, in relation to the application of the telecommunication apparatus, there have been problems of electrical noises as a cause of data errors in an integrated circuit, and there is known a method for suppressing influences of the electrical noises, in which the electrical noises are removed by providing a high-capacity capacitor on a printed-wiring board. Downsizing and high-functionalization of electronic parts are realized through the use of the high-dielectric material as a capacitor material.

It is known that base materials used for these applications are organic rubbers represented by EPDM and thermosetting resins represented by epoxy resins. Furthermore, a high-dielectric silicone rubber in which a silicone rubber base is blended with a high-dielectric material has also been developed.

As the high-dielectric material blended in order to make the silicone rubber exhibit higher permittivity, a dielectric ceramics, a carbon black, and the like represented by a metal oxide and barium titanate are known, and the following patents have traditionally been disclosed. The former includes multiple oxides represented by a material in which a conductive zinc oxide is doped with aluminum (JP-A 2003-331653), a material including a dielectric ceramics represented by barium titanate (JP-A 2001-266680) . However, since high permittivity cannot be achieved unless these high-dielectric materials are highly-filled, they have problems as rubber materials, in which increased specific gravity of the rubber composition results in heaviness and intractability of the product, reliability is decreased because of electric field stress caused by the increased dielectric tangent associated with being made to exhibit higher permittivity, the high-dielectric materials are unsuitable for commercial use because of their high cost.

Moreover, high-dielectric rubber material containing a carbon black is included (JP-A 8-22716), but there have been disadvantages that achievement of high permittivity requires somewhat high fill ration, and thus its electric properties cannot sufficiently maintain insulation property, resulting in becoming conductive or semiconductive property.

### Problems to be Solved by the Invention, and Objects of the Invention

According to the method of JP-A 2003-331653 using the multiple oxides represented by the material in which the conductive zinc oxide is doped with aluminum, although weatherability can be improved, there are disadvantages that the specific gravity is increased and mechanical properties such as tensile strength are lowered.

According to the method of JP-A 2001-266680 in which the dielectric ceramics represented by barium titanate are contained, the specific gravity is increased and there are disadvantages in cost performance and physical property.

Document US 2003/0216234 A1 discloses a cured resin layer comprising carbon black aggregates which are homogeneously dispersed in the resin.

Document JP 2000-351903 A discloses a composition having good carbon black dispersability and small unevenness of electric resistance and being excellent in electric resistance by including a liquid polymer and a specified carbon black. This composition is obtained by including (A) a liquid polymer, (B) a carbon black fixedly covered with silica on the surface, (C) a hydrosilyl curing agent and (d) a hydrosilylating agent.

The object of the present invention is to provide a use of the silicone rubber composition exhibiting high permittivity and low dielectric tangent, being excellent in weatherability and insulation properties (10¹² Ω·cm or more), as well as having low specific gravity and excellent physical properties such as tensile strength.

As a result of earnest study for achieving the object, the inventors have found that the composition having achieved the object is obtained by blending the conductive carbon black being 60% or more silica-coated and containing 25 wt% or more of the silica due to its coating, and have completed the present invention.

### Summary of the Invention

The invention is defined in claim 1.

The silicone rubber composition is used for electric power equipments or telecommunication apparatuses.

### Detailed Description of the Invention

A preferable aspect of the present invention is the above-mentioned silicone rubber composition in which the rubber-vulcanized material (rubber stress cone) is used for a power cable member, another preferable aspect of the present invention is the above-mentioned silicone rubber composition in which the capacitor material is used for electronic parts, a further preferable aspect of the present invention is the above-mentioned silicone rubber composition having high permittivity, being excellent in weatherability and insulation resistance (10¹² Ω·cm or more), and exhibiting low specific gravity and excellent tensile strength, or a still further preferable aspect of the present invention is the above-mentioned high-dielectric and low-loss dielectric silicone rubber composition having a relative permittivity of 5 to 100 and a dielectric tangent of 0.1 or less.

A component (A) of the present invention is the polyorganosiloxane represented by an average unit formula: RₐSiO_{(4-a)/2} (in which R is a substituted or unsubstituted monovalent hydrocarbon group, and a is 1.98-2.02). Although a straight structure is mainly used, a branched structure or

The object of the present invention, namely, the use of a silicone rubber composition according to claim 1, the method of manufacturing a rubber vulcanized material (rubber stress cone) according to claim 9, and the method of manufacturing a capacitor material according to claim 11, is to apply a

silicone rubber composition exhibiting high permittivity and low dielectric tangent, being excellent in weatherability and insulation properties (10¹²Ω cm or more), as well as having low specific gravity and excellent physical properties such as tensile strength.

As a result of earnest study for achieving the object, the inventors have found that the composition having achieved the object is obtained by blending the conductive carbon black being 60% or more silica-coated and containing 25 wt% or more of the silica due to its coating, and have completed the present invention.

### Summary of the Invention

That is, invention 1 is defined by the claims.

### Detailed Description of the Invention

A preferable aspect 5 of the present invention is the above-mentioned silicone rubber composition in which the rubber-vulcanized material (rubber stress cone) is used for a power cable member, a preferable aspect 7 of the present invention is the above-mentioned silicone rubber composition in which the capacitor material is used for electronic parts, a preferable aspect 8 of the present invention is the above-mentioned silicone rubber composition having high permittivity, being excellent in weatherability and insulation resistance (10¹²Ω cm or more), and exhibiting low specific gravity and excellent tensile strength, or a preferable aspect 9 of the present invention is the above-mentioned high-dielectric and low-loss dielectric silicone rubber composition having a relative permittivity of 5 to 100 and a dielectric tangent of 0.1 or less.

A component (A) of the present invention is the polyorganosiloxane represented by an average unit formula: RₐSiO_{(4-a)/2} (in which R is a substituted or unsubstituted monovalent hydrocarbon group, and a is 1.98-2.02). Although a straight structure is mainly used, a branched structure or a three-dimensional structure may be partly formed, and the component may be a single polymer, a copolymer or a mixture thereof. The substituted or unsubstituted monovalent hydrocarbon group bonded to silicon atom of the polyorganosiloxane includes, for example, an alkyl group such as a methyl group, an ethyl group and a propyl group; an alkenyl group such as a vinyl group, an allyl group and a butadienyl group; an aryl group such as a phenyl group, a xenyl group and a naphthyl group; a cycloalkyl group such as a cyclohexyl group; a cycloalkenyl group such as a cyclohexenyl group; an aralkyl group such as a benzyl group; an alkylaryl such as a tolyl group and a xylyl group. Although the methyl group is mainly used as these monovalent hydrocarbon groups bonded to silicon atom, for example, the content of the vinyl group may preferably be about 0 to 5%, particularly 0.05 to 3% relative to total number of organic groups, from the viewpoint of mechanical strength and cross-linking performance. Meanwhile, a molecular chain terminal of the polyorganosiloxane includes, for example, a hydroxyl group, an alkoxy group or a triorganosilyl group, more preferably the triorganosilyl group. The triorganosilyl group includes, for example, a trimethylsilyl group, a dimethylvinylsilyl group, methylphenylvinylsilyl group, a methyldiphenylsilyl group, or the like. An average degree of polymerization of the above-mentioned component (A) is generally within the range of, without limitation, about 100 to 20000, preferably about 4000 to 20000.

Furthermore, in the present invention, a polyorganosiloxane containing a fluoroalkyl group is also preferably used as the component (A). In relation to a composition of fluorosilicone, it contains 5 to 50 mole% of a 3,3,3-trifluoropropyl group relative to the total organic groups, and also 0.01 to 2 mole% of the vinyl group for effective crosslinking. The reason why the percentage of the 3,3,3-trifluoropropyl group is limited to this range is because if the amount is less than the percentage, dielectric property superior to that of the dimethyl silicone rubber, which is an object of the fluorosilicone composition cannot be obtained, and if the amount is more than the percentage, workability is lowered, and moreover, other properties particular to the silicone rubber, i.e. heat resistance, or weatherability are lowered. Furthermore, when the content of the vinyl group is less than 0.01 mole%, vulcanization is not preferably performed, and when the content of the vinyl group is more than 2 mole%, heat resistance cannot be obtained. Examples of the organic groups binding to silicon atom other than these two types include an alkyl group such as a methyl group, an ethyl group or a propyl group, an aryl group such as a phenyl group, and a substituted hydrocarbon group such as a chlorophenyl group, but the methyl group is preferable from the viewpoint of ease of synthesis as well as workability and heat resistance of the composition. The number of such organic group has to be 1.98 to 2.02 per one silicon atom. This is because the smaller number than this one cannot obtain a preferable rubbery elastic body. Although a slightly branched chain does not become a problem, a strait polyorganosiloxane is generally used as the (A). The molecular chain terminal may be blocked by any of the triorganosilyl group and a silanol group. The degree of polymerization is preferably 100 or more, more preferably 1000 or more, and in particular preferably 2000 to 10000.

The component (B) used in the present invention is the conductive carbon black being 60% or more silica-coated and containing 25 wt% or more of silica due to its coating.

Such a silica-coated conductive carbon black is obtained by fixing silica on the surface of carbon black through chemical adsorption or the like and has a biphasic structure of carbon black and silica.

Such silica-coated conductive carbon black can be manufactured by a method in a gas phase shown in WO 96/37547. Additionally, JP-A 63-63755 proposes a method of depositing silica on the surface of carbon black by action in water. The various methods in the gas phase and the liquid phase can produce a silica-coated carbon black.

The conductive carbon black to be used is not especially limited and may be optionally selected from materials generally used for this type of composition, for example an acetylene black, a conductive furnace black, a conductive channel black or the like. Examples of the acetylene black include DENKA Black (which is a trade name and manufactured by Denki Kagaku Kogyo K.K.), or SHAWNIGAN Acetylene Black (which is a trade name and manufactured by SHAWNIGAN CHEMICAL). Examples of the conductive furnace black include Continex CF, Continex SCF (which are trade names and manufactured by Continental Carbon Company), VULCAN C, VULCAN SC, VULCAN P, VULCAN XC-72 (which are trade names and manufactured by Cabot Corporation), or ASAHI HS-500 (which is a trade name and manufactured by ASAHI CARBON CO., LTD.). Examples of the conductive channel black include Corax L (which is a trade name and manufactured by Degussa AG). In addition, KetjenBlack EC and KetjenBlack EC-600JD (which are trade names and manufactured by Ketjen Black International Com) which are kinds of furnace black can be used.

Besides these, a silica-coated carbon commercially available from Cabot Corporation or the like can also be used.

The silica (SiO₂) coating percentage in the silica-coated conductive carbon black contained in the above-described silicone rubber composition is required to be 60% or more for achieving this object.

Furthermore, the silica coating percentage proposed in the present invention can be calculated by the following method.

A specific surface area of whole particles of the coated conductive carbon black is obtained by STSA method (JIS 6217-7) . Moreover, a specific surface area of the silica-non-coated part of the conductive carbon black is obtained from the amount of iodine adsorption (JIS K6217-2), and the silica coating percentage can be calculated from its difference. That is, the silica coating percentage of the silica-coated conductive carbon black can be obtained by a formula: the silica coating percentage of the conductive carbon black = [(whole specific surface area) - (specific surface area of the exposed conductive carbon black)] / (whole specific surface).

Furthermore, the silica coating percentage is 60% or more, preferably 60-95%. In a case of less than 60%, the insulation property cannot be maintained, and in a case of more than 95%, the dielectric property is lowered.

The silica content in the silica-coated conductive carbon black is preferably 25 to 50 wt% relative to the silica-coated carbon. In a case of less than 25 wt%, the silica coverage (silica coating percentage) is hard to be maintained at 60% or more, and in a case of more than 50 wt%, the silica coating percentage is hard to be maintained at 95% or less.

Furthermore, a blending quantity of the silica-coated conductive carbon black of the component (B) may be within a range in which the relative permittivity of the vulcanized material made up of the present composition is 5 to 100, preferably 5 to 100 parts by weight relative to 100 parts by weight of the component (A), in particular preferably 10 to 80 parts by weight. When the amount of the component (B) is considerably small, the intended high-dielectric property cannot be obtained, and when the blending amount is excessively large, strength and elasticity of the vulcanized rubber obtained by vulcanizing the composition is lowered.

Here, an example in which a rubber is filled with a silica-coated carbon black includes the use or the like of a tire rubber as a filler (WO 96/37547) . However its aim is the improvement or the like of the physical property of the rubber, dynamic hysteresis, abrasion resistance by the silica-coated carbon black, moreover the silica coating percentage and blending quantity of the carbon black or the like are also limited, and there are no descriptions at all about high permittivity, low dielectric tangent and excellent insulation property, which are objects of the present invention.

In relation to a conductive roll (JP-A 2001-263333), although the conductive roll made up of a liquid silicone rubber in which a silica-coated carbon black and a conductive carbon black are combined is proposed, the document describes conductive property, and thus the content of the document is completely different from having high permittivity and low dielectric tangent and being excellent in insulation property, which are the objects of the present invention.

The vulcanizing agent of the component (C) is not particularly limited as long as it can vulcanize the component (A), but an organic peroxide catalyst generally known as the vulcanizing agent of the silicone rubber and a combination of a platinum-based catalyst and an organohydrogen polysiloxane are preferable. Each of them is used in an appropriate amount which is effective for vulcanizing.

The organic peroxide catalyst includes, for example, benzoyl peroxide, 2,4-dichlorobenzoyl peroxide, o-methylbenzoyl peroxide, p-methylbenzoyl peroxide, 2,4-dicumyl peroxide, 2,5-dimethyl-bis(2,5-t-butylperoxy) hexane, di-t-butyl peroxide, or t-butyl perbenzoate. An addition amount of the organic peroxide catalyst may generally be 0.1 to 5 parts by weight relative to 100 parts by weight of the component (A).

In the use of the combination of the platinum-based catalyst and the organohydrogen polysiloxane, the organo polysiloxane of the component (A) is required to have aliphatic unsaturated bonds bonded to silicon atom, particularly at least two alkenyl groups such as vinyl groups and allyl groups in its molecule.

As the platinum-based catalyst, a known catalyst can be used, and specifically examples of it include a single platinum element, a platinum compound, a platinum complex, a chloroplatinic acid, an alcohol compound of the chloroplatinic acid, an aldehyde compound, an ether compound, or a complex with various olefins. An addition amount of the platinum-based catalyst should be an effective amount, and specifically, it is desirable that the amount of the platinum atom is generally within 1 ppm to 2, 000 ppm relative to the organo polysiloxane of the component (A).

Although the organohydrogen polysiloxane may be any of be straight, blanched or cyclic, its degree of polymerization is preferably 300 or less, and examples of it includes: a diorgano polysiloxane of which the terminal is blocked by a dimethylhydrogen silyl group; a copolymer of a dimethylsiloxane unit, a methylhydrogen siloxane unit and a trimethylsiloxy unit which stops the terminal; a copolymer being a low-viscosity fluid made up of a dimethylhydrogen siloxane unit (H(CH₃)₂SiO: 0.5 unit) and an SiO₂ unit; a 1,3,5,7-tetrahydrogen-1,3,5,7-tetramethylcyclotetrasiloxane ; a 1-propyl-3,5,7-trihydrogen-1,3,5,7-tetramethylcyclotetrasiloxane; or a 1,5-dihydrogen-3,7-dihexyl-1,3,5,7-tetramethylcyclotetrasiloxane.

The addition amount of the organohydrogen polysiloxane is an effective amount, and specifically, it is preferably used in an amount in which a number of hydrogen atom is 0.5 to 4, particularly 1 to 3 per one alkenyl group contained in the organopolysiloxane of the compound (A).

In the composition of the present invention, in addition to the above-mentioned essential components, other components can be added in a range in which the effects of the present invention are not prevented, which include various additives such as a filler like a reinforcing silica fine powder, a colorant and a heat resistance improver; a reaction-control agent; a mold release agent; or a dispersant for fillers. The addition amount of a diphenylsilanediol, various alkoxysilanes, a carbon functional silane, or a low-molecular siloxane containing a silanol group, which are to be used as dispersants for fillers is preferably minimized so that the effects of the present invention are not impaired.

The silicone rubber composition of the present invention can be molded and vulcanized into a rubber member for power cable connection parts, i.e. the rubber stress cone by various molding methods such as die casting and extrusion. Through the use of the resulting rubber vulcanized material (rubber stress-cone), i.e. the rubber member for the power cable connection parts, the power cables are connected. Specifically, in a middle connecting portion and a terminal part of the power cable, the rubber stress cone is used, for example, as an electric field-relaxing layer for a connecting jig.

Furthermore, the use of the molded product as a capacitor material can realize downsizing and high functionalization of electronic parts as the high-dielectric material.

### Examples

Next, following examples of the present invention will be explained. Additionally, parts in the examples means parts by weight.

### (Example of preparation)

### Compound A-1

100 parts of a polydimethylsiloxane (degree of polymerization: approx. 5500) containing 0.13 mole% of a methylvinylsiloxane unit, 2 parts of a dimethylpolysiloxane containing a silanol group (degree of polymerization n=25) as a dispersant, 3 parts of a dimethylpolysiloxane containing a silanol group (degree of polymerization n=10), and 63 parts of a carbon (TPX1169 manufactured by Cabot Corporation) that is 65% silica-coated (silica content of 35 wt%) were uniformly kneaded through the use of a kneader, subsequently treated at 150°C for 2 hours.

### Compound A-2

A compound A-2 was obtained like the compound A-1 except that a carbon (TPX1181 manufactured by Cabot Corporation) that is 85% silica-coated (silica content of 48 wt%) was used as the silica-coated carbon.

### Compound A-3

A compound A-3 was obtained like the compound A-1 except that a carbon (TPX1144 manufactured by Cabot Corporation) that is 55% silica-coated (silica content is 22 wt%) was used as the silica-coated carbon.

### Compound A-4

A compound A-4 was obtained like the compound A-1 except that 100 parts of the polyorganosiloxane with a degree of polymerization of 3000, having both terminals blocked by the dimethylvinylsilyl group and including 99.5 mole% of a methyl (3,3,3-trifluoropropyl) siloxy unit and 0.5 mole% of a methylvinylsiloxy unit, and 2 parts of an α,ω-dihydroxy (γ-trifluoropropyl) methylsiloxane oligomer with a viscosity of 30 cSt as the dispersant were used.

### Compound B

100 parts of the polydimethylsiloxane (degree of polymerization: approx. 5500) containing 0.13 mole% of the methylvinylsiloxane unit, 2.5 parts of the dimethylpolysiloxane containing a silanol group (degree of polymerization n=25) as the dispersant, and 33 parts of a silica (Aerosil 200 manufactured by Nippon Aerosil Co., Ltd.) were uniformly kneaded through the use of the kneader, subsequently treated at 150°C for 2 hours.

### Compound C

100 parts of the polydimethylsiloxane (degree of polymerization: approx. 5500) containing 0.13 mole% of the methylvinylsiloxane unit, 1 parts of the dimethylpolysiloxane containing a silanol group (degree of polymerization n=25) and 1 parts of the dimethylpolysiloxane containing a silanol group (degree of polymerization n=10) as the dispersants, 15 parts of the silica (Aerosil 200 manufactured by Nippon Aerosil Co.,Ltd.), and 315 parts of barium titanate (PALCERAM BT-UP2 manufactured by Nippon Chemical Industrial Co., LTD.) were uniformly kneaded through the use of the kneader, subsequently treated at 150°C for 2 hours.

### Compound D

100 parts of the polydimethylsiloxane (degree of polymerization: approx. 5500) containing 0.13 mole% of the methylvinylsiloxane unit, 2 parts of the dimethylpolysiloxane containing a silanol group (degree of polymerization n=25) and 3 parts of the dimethylpolysiloxane containing a silanol group (degree of polymerization n=10) as the dispersants, 35 parts of the conductive carbon (DENKA Black HS-100 manufactured by Denki Kagaku Kogyo K.K.), and 28 parts of the silica (Aerosil 200 manufactured by Nippon Aerosil Co.,Ltd.) were uniformly kneaded through the use of the kneader, subsequently treated at 150°C for 2 hours.

### Example 1

In 90 parts of the compound A-1 prepared in the example of preparation, 10 parts of the compound B and 2 parts of a 2,5-dimethyl-2,5-di-t-butyl peroxyhexane as the vulcanizing agent were kneaded to obtain a composition, which was then heated and compression-molded into 130 mm sq sheet-shaped elastic bodies having thicknesses of 2 mm and 1 mm, respectively. Molding was performed at 170°C for 10 minutes and the molding pressure was 10 MPa. Subsequently, secondary cross-linking (post cure) was performed at 200°C for 4 hours to produce samples for physical property and electric property, respectively. Examples 2-5 and Comparative Examples 1-3

Samples were produced for physical property and electric property respectively like Example 1 except for using compounds of kinds and amounts shown in Table 1.

### Comparative Example 4

A sample was produced for electric property like Example 1 except for using compound B in order to confirm electric property of a general silicone rubber. The relative permittivity was 2.8, the dielectric tangent was 0.003, and the volume resistivity was 1E+16Ω cm.

These samples were each evaluated. Their evaluation methods are as follows. The results are shown in Table 1.

### <Physical properties>

Hardness was measured in conformity to JIS K 6249.

Tensile strength was measured in conformity to JIS K 6249.

Extension at break was measured in conformity to JIS K 6249.

### <Volume resistivity>

Measurement was performed through the use of "Digital ultra-high resistance/micro current meter R8340" manufactured by ADVANTEST CORPORATION in conformity to JIS K 6249.

### <Measurement of relative permittivity>

For the samples for measuring the relative permittivity obtained from the above-mentioned Examples and Comparative Examples, the relative permittivity was measured through the use of a dielectric loss automatic measuring instrument (instrument name: TR-1100) manufactured by Ando Electric Co., Ltd. The measurement was performed at frequency of 60 Hz by using a 18 mmφ main electrode and a 39 mmφ guard electrode.

**[Table 1]**

| | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|
| Compound A-1 | 90 | 100 | | | | | | | | |
| Compound A-2 | | | 100 | 83 | 69 | 56 | | | | |
| Compound A-3 | | | | | | | | | | 100 |
| Compound A-4 | | | | | | | 100 | | | |
| Compound B | 10 | | | 17 | 32 | 45 | | | | |
| Compound C | | | | | | | | 100 | | |
| Compound D | | | | | | | | | 100 | |
| Kind of high-dielectric filler used | Carbon | Carbon | Carbon | Carbon | Carbon | Carbon | Carbon | Barium titanate | Carbon | Carbon |
| Silica coverage (%) | 65 | 65 | 85 | 85 | 85 | 85 | 65 | - | 0 | 55 |
| Base polymer used | Dimethyl silicone | Dimethyl silicone | Dimethyl silicone | Dimethyl silicone | Dimethyl silicone | Dimethyl silicone | Fluorosilicone | Dimethyl silicone | Dimethyl silicone | Dimethyl silicone |

| Property | | | | | | | | | | |
|---|---|---|---|---|---|---|---|---|---|---|
| Hardness | 63 | 60 | 67 | 62 | 57 | 53 | 67 | 55 | 54 | 60 |
| Tensile strength (MPa) | 4.8 | 3.9 | 5.0 | 7.6 | 8.1 | 8.3 | 3.5 | 4.0 | 7.5 | 3.8 |
| Extension at break (%) | 260 | 280 | 230 | 380 | 470 | 530 | 200 | 350 | 410 | 250 |
| Density (g/cm³) | 1.14 | 1.15 | 1.20 | 1.19 | 1.18 | 1.17 | 1.17 | 2.65 | 1.20 | 1.15 |
| (ε) 1mm, 60Hz | 14.9 | 16.4 | 10.9 | 8.2 | 6.9 | 5.5 | 22.7 | 6.5 | ND | ND |
| p1000V_1mm | 5.9E+13 | 6.9E+12 | 9.9E+14 | 2.8E+15 | 3.1E+15 | 5.3E+15 | 1.3E+12 | 9E+14 | 1.0E+04 | 4.0E+11 |

| | | | | | | | | | | |
|---|---|---|---|---|---|---|---|---|---|---|
| ND: unmeasurable due to electrical conductivity | | | | | | | | | | |

## Claims

1. Use of a silicone rubber composition comprising:
(A) 100 parts by weight of a polyorganosiloxane,
(B) 5 to 100 parts by weight of an electrically conductive carbon black 60% or more of which is silica-coated and in which the content of silica is 25 wt% or more in the silica coating, and
(C) a necessary amount of a vulcanizing agent,
for forming a rubber vulcanized material having an insulation resistance of 10¹²Ω·cm or more and for making a capacitor material, an electric power apparatus or a telecommunication apparatus.

2. The use according to claim 1, wherein the (A) polyorganosiloxane is a polyorganosiloxane containing a fluoroalkyl group.

3. The use according to claim 1 wherein the silicone rubber composition is molded and vulcanized into a rubber vulcanized material (rubber stress cone).

4. The use according to claim 3, wherein the rubber vulcanized material (rubber stress cone) is used for power cable members.

5. The use according to claim 1 wherein the silicone rubber composition is molded and vulcanized into a capacitor material.

6. The use according to claim 5, wherein the capacitor material is used for electronic parts.

7. The use according to any one of the preceding claims, the rubber vulcanized material formed from the silicone rubber composition having a relative permittivity of 5 to 100.

8. The use according to any one of the preceding claims, wherein the silicone rubber composition has a relative permittivity of 5 to 100 and a dielectric loss of 0.1 or less.

## Patentansprüche

1. Verwendung einer Silikonkautschuk-Zusammensetzung mit:
(A) 100 Gewichtsteilen eines Polyorganosiloxans,
(B) 5 bis 100 Gewichtsteilen eines elektrisch leitfähigen Rußes, wovon 60% oder mehr Silica-beschichtet sind und wobei der Gehalt an Silica in der Silica-Beschichtung 25 Gew.-% oder mehr beträgt, und
(C) einer erforderlichen Menge eines Vulkanisierungs-Agens,
zum Bilden eines vulkanisierten Kautschukmaterials mit einem Isolationswiderstand von 10¹²Ω·cm oder mehr und zum Herstellen eines Kondensatormaterials, einer Stromvorrichtung oder einer Telekommunikationsvorrichtung.

2. Verwendung gemäß Anspruch 1, wobei das (A) Polyorganosiloxan ein Polyorganosiloxan mit einer Fluoralkylgruppe ist.

3. Verwendung gemäß Anspruch 1, wobei die Silikonkautschuk-Zusammensetzung geformt und zu einem vulkanisierten Kautschukmaterial (rubber stress cone) vulkanisiert wird.

4. Verwendung gemäß Anspruch 3, wobei das vulkanisierte Kautschukmaterial (rubber stress cone) für Stromkabel-Bauteile verwendet wird.

5. Verwendung gemäß Anspruch 1, wobei die Silikonkautschuk-Zusammensetzung geformt und zu einem Kondensatormaterial vulkanisiert wird.

6. Verwendung gemäß Anspruch 5, wobei das Kondensatormaterial für elektronische Komponenten verwendet wird.

7. Verwendung gemäß einem der vorstehenden Ansprüche, wobei das aus der Silikonkautschuk-Zusammensetzung gebildete vulkanisierte Kautschukmaterial eine relative Permittivität von 5 bis 100 aufweist.

8. Verwendung gemäß einem der vorstehenden Ansprüche, wobei die Silikonkautschuk-Zusammensetzung eine relative Permittivität von 5 bis 100 und einen dielektrischen Verlust von 0,1 oder weniger aufweist.

## Revendications

1. Utilisation d'une composition de caoutchouc de silicone comprenant :
(A) 100 parties en poids d'un polyorganosiloxane,
(B) 5 à 100 parties en poids d'un noir de carbone électroconducteur dont 60 % ou plus sont revêtus de silice et dans lequel la teneur en silice est de 25 % en poids ou plus dans le revêtement de silice, et
(C) une quantité nécessaire d'un agent de vulcanisation,
pour former un matériau vulcanisé de caoutchouc présentant une résistance d'isolement de 10¹² Ω.cm ou plus et pour fabriquer un matériau de condensateur, un appareil électrique ou un appareil de télécommunications.

2. Utilisation selon la revendication 1, dans laquelle le polyorganosiloxane (A) est un polyorganosiloxane contenant un groupe fluoroalkyle.

3. Utilisation selon la revendication 1 dans laquelle la composition de caoutchouc de silicone est moulée et vulcanisée en un matériau vulcanisé de caoutchouc (cône de contrainte en caoutchouc).

4. Utilisation selon la revendication 3, dans laquelle le matériau vulcanisé de caoutchouc (cône de contrainte en caoutchouc) est utilisé pour des organes de câble d'alimentation.

5. Utilisation selon la revendication 1 dans laquelle la composition de caoutchouc de silicone est moulée et vulcanisée en un matériau de condensateur.

6. Utilisation selon la revendication 5, dans laquelle le matériau de condensateur est utilisé pour des pièces électroniques.

7. Utilisation selon l'une des revendications précédentes, le matériau vulcanisé de caoutchouc formé à partir de la composition de caoutchouc de silicone présentant une permittivité relative de 5 à 100.

8. Utilisation selon l'une des revendications précédentes, dans laquelle la composition de caoutchouc de silicone présente une permittivité relative de 5 à 100 et une perte diélectrique de 0,1 ou moins.
